# EUROPEAN PATENT APPLICATION

(11) **EP 3 524 379 A1**
(43) Date of publication of application: **14.08.2019**
(21) Application number: 19156229.7
(22) Date of filing: 08.02.2019
(51) Int. Cl.: B23K 9/10, B23K 9/095

(54) **DISPLAY WITH COMBINED WELD AND ENGINE INFORMATION**

(30) Priority: 08.02.2018 US 201815891792
(71) Applicant: Lincoln Global, Inc., Santa Fe Springs, CA 90670 (US)
(72) Inventor: ENYEDY, Edward A., Eastlake, OH Ohio 44095 (US); DONNELLY, Patrick J., Lakewood, OH Ohio 44107 (US)
(74) Representative: Grosse Schumacher Knauer von Hirschhausen

(57) **Abstract**

The invention described herein generally pertains to a system (400, 500) and method for a welding device and, in particular, an engine-driven welding device that includes a display (510) providing both welding power source data and engine data to a user. The display (510) can provide welding power source data and engine data using multiple display states. For example, in one display state, the welding power source data and engine data can be displayed simultaneously. In another display state, only the welding power source data is displayed. In yet another display state, only engine data is displayed.

## Description

### FIELD OF THE INVENTION

The invention is related to a welding system according to claim 1, to a method for displaying welding system data according to claim 7 and to a non-transitory, computer-readable storage medium according to claim 11. The invention described herein pertains generally to a system and method for simultaneously displaying weld and engine information for an engine driven welder.

### TECHNICAL BACKGROUND

Frequently, welding can occur where line power may not be readily available. As such, a welder may be an engine driven welder incorporating a generator. The generator may supply power to the welder as well other power tools on site.

Traditional welding-type apparatus can be broken into two basic categories. The first category receives operational power from transmission power receptacles, also known as static power. The second is portable or self-sufficient, standalone welders having internal combustion engines, also known as rotating power. While in many settings conventional static power driven welders are preferred, engine driven welders enable welding-type processes where static power is not available. Rotating power driven welders operate by utilizing power generated from engine operation. As such, engine driven welders and welding-type apparatus allow portability and thus fill an important need.

Welding power source data such as operational parameters or notifications pertaining to the welding power source may be provided on a display dedicated to the welding power source. Similarly, engine data such as operational parameters or notifications pertaining to the engine are traditionally provided on a display dedicated to the engine.

### DESCRIPTION

With respect to improve handling of welding, a welding system according to claim 1 is described, and a method for displaying welding system data according to claim 7 and a non-transitory, computer-readable storage medium according to claim 11. Preferred embodiments of the invention are subject of the subclaims. In accordance with the present innovation, there is provided a welding system that includes a welding power source configured to supply welding power for a welding operation, an engine coupled to the welding power source, wherein the engine supplies power to the welding power source, and a display configured to selectively switch between at least a first display state and a second display state based on a signal indicative of an active welding operation. The first display state displays welding power source data simultaneously with engine data and the second display state displays only welding power source data.

Also provided is method for displaying welding system data including receiving welding power source data pertaining to a welding power source configured to supply welding power for a welding operation, receiving engine data pertaining to an engine coupled to the welding power source, wherein the engine supplies power to the welding power source, displaying a first display state, wherein the first display state displays the welding power source data simultaneously with the engine data, receiving a signal indicative of an active welding operation, and displaying a second display state based on receiving the signal indicative of the active welding operation. The second display state displays only the welding power source data.

Also provided is a non-transitory, computer-readable storage medium having stored thereon computer-executable instruction for operating a display, wherein the instructions, when executed, configure a processor to obtain welding power source data from a welding power source configured to supply welding power for a welding operation, obtain engine data from an engine coupled to the welding power source, wherein the engine supplies power to the welding power source, display a first display state on a display, wherein the first display state displays the welding power source data simultaneously with the engine data, and selectively switch the display between at least the first display state and a second display state based on a signal indicative of an active welding operation. The second display state displays only the welding power source data.

These and other objects of this invention will be evident when viewed in light of the drawings, detailed description and appended claims.

### Brief Description of the Drawings

The invention may take physical form in certain parts and arrangements of parts, a preferred embodiment of which will be described in detail in the specification and illustrated in the accompanying drawings which form a part hereof, and wherein:
*Fig. 1* is a welding device that includes a motor as a power source;
*Fig. 2* is a welding device;
*Fig. 3* is a welding device affixed to a trailer for mobility;
*Fig. 4* is a diagram illustrating an engine driven welding system;
*Fig. 5* is a diagram illustrating a system for providing a combined display including engine and welder information;
*Fig. 6* illustrates an exemplary display;
*Fig. 7* illustrates a screen shot in accordance with an embodiment of the subject innovation;
*Fig. 8* illustrates a screen shot in accordance with an embodiment of the subject innovation;
*Fig. 9* illustrates a screen shot in accordance with an embodiment of the subject innovation;
*Fig. 10* is a flow chart of a method in accordance with an embodiment of the subject innovation; and
*Fig. 11* is a flow chart of a method in accordance with an embodiment of the subject innovation.

### Detailed Description

Embodiments of the invention relate to methods and systems for a welding device and, in particular, an engine-driven welding device that includes a display providing both welding power source data and engine data to a user. The display can provide welding power source data and engine data using multiple display states. For example, in one display state, the welding power source data and engine data can be displayed simultaneously. In another display state, only the welding power source data is displayed. In yet another display state, only engine data is displayed.

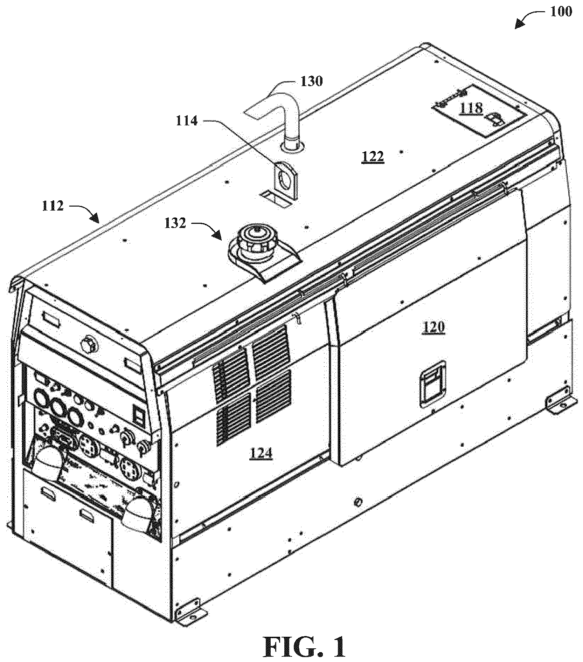

The subject innovation can be used with any suitable engine-driven welder, engine-driven welding system, engine-driven welding apparatus, a welding system powered by an engine, a welding system powered by a battery, a welding system powered by an energy storage device, a hybrid welder (e.g., a welding device that includes an engine driven power source and an energy storage device or battery), or a combination thereof. It is to be appreciated that any suitable system, device, or apparatus that can perform a welding operation can be used with the subject innovation and such can be chosen with sound engineering judgment without departing from the intended scope of coverage of the embodiments of the subject invention. The engine driven welder can include a power source that can be used in a variety of applications where outlet power is not available or when outlet power will not be relied on as the sole source of power including portable power generation, backup power generation, heating, plasma cutting, welding, and gouging. The example discussed herein relates to welding operations, such as, arc welding, plasma cutting, and gouging operations. It is to be appreciated that a power source can generate a portion of power, wherein the portion of power is electrical power. It is to be appreciated that "power source" as used herein can be a motor, an engine, a generator, an energy storage device, a battery, a component that creates electrical power, a rotor/stator assembly, a component that converts electrical power, or a combination thereof. By way of example and not limitation, *Figs. 1-4* illustrate welding systems or devices that can be utilized with the subject innovation. It is to be appreciated that the following welding systems are described for exemplary purposes only and are not limiting on the welding systems that can utilize the subject innovation or variations thereof.

"Welding" or "weld" as used herein including any other formatives of these words will refer to depositing of molten material through the operation of an electric arc including but not limited to submerged arc, GTAW, GMAW, MAG, MIG, TIG welding, any high energy heat source (e.g., a laser, an electron beam, among others), or any electric arc used with a welding system. Moreover, the welding operation can be on a workpiece that includes a coating such as, but not limited to, a galvanized coating.

"Component" or "Controller" as used herein can be a portion of hardware, a portion of software, or a combination thereof that can include or utilize at least a processor and a portion of memory, wherein the memory includes an instruction to execute.

While the embodiments discussed herein have been related to the systems and methods discussed above, these embodiments are intended to be exemplary and are not intended to limit the applicability of these embodiments to only those discussions set forth herein. The control systems and methodologies discussed herein are equally applicable to, and can be utilized in, systems and methods related to arc welding, laser welding, brazing, soldering, plasma cutting, waterjet cutting, laser cutting, and any other systems or methods using similar control methodology, without departing from the spirit or scope of the above discussed innovations. The embodiments and discussions herein can be readily incorporated into any of these systems and methodologies by those of skill in the art. By way of example and not limitation, a power supply as used herein (e.g., welding power source, among others) can be a power supply for a device that performs welding, arc welding, laser welding, brazing, soldering, plasma cutting, waterjet cutting, laser cutting, among others. Thus, one of sound engineering and judgment can choose power supplies other than a welding power supply departing from the intended scope of coverage of the embodiments of the subject innovation.

The best mode for carrying out the invention will now be described for the purposes of illustrating the best mode known to the applicant at the time of the filing of this patent application. The examples and figures are illustrative only and not meant to limit the invention, which is measured by the scope and spirit of the claims. With reference to the drawings, like reference numerals designate identical or corresponding parts throughout the several views. However, the inclusion of like elements in different views does not mean a given embodiment necessarily includes such elements or that all embodiments of the innovation include such elements. The examples and figures are illustrative only and not meant to limit the innovation, which is measured by the scope and spirit of the claims.

*Fig. 1* illustrates a welding device **100.** The welding device **100** includes a housing **112** which encloses the internal components of the welding device. Optionally, the welding type device **100** includes a loading eyehook **114** and/or fork recesses **116.** The loading eyehook **114** and the fork recesses **116** facilitate the portability of the welding device **100.** Optionally, the welding-type device **100** could include a handle and/or wheels as a means of device mobility. The housing **112** also includes a plurality of access panels **118, 120.** Access panel **118** provides access to a top panel **122** of housing **112** while access panel **120** provides access to a side panel **124** of housing **112.** A similar access panel is available on an opposite side. These access panels **118, 120,** provide access to the internal components of the welding device **100** including, for example, an energy storage device (not shown) suitable for providing welding-type power. An end panel **126** includes a louvered opening **128** to allow for air flow through the housing **112.**

The housing **112** of the welding-type device **100** also houses an internal combustion engine. The engine is evidenced by an exhaust port **130** and a fuel port **132** that protrude through the housing **112.** The exhaust port **130** extends above the top panel **122** of the housing **112** and directs exhaust emissions away from the welding-type device **100.** The fuel port **132** preferably does not extend beyond the top panel **122** or side panel **124.** Such a construction protects the fuel port **132** from damage during transportation and operation of the welding-type device **100.** The internal combustion engine can operate on any known fuel including but not limited to gasoline, diesel, ethanol, natural gas, hydrogen, and the like. These examples are not limiting as other motors or fuels may be used.

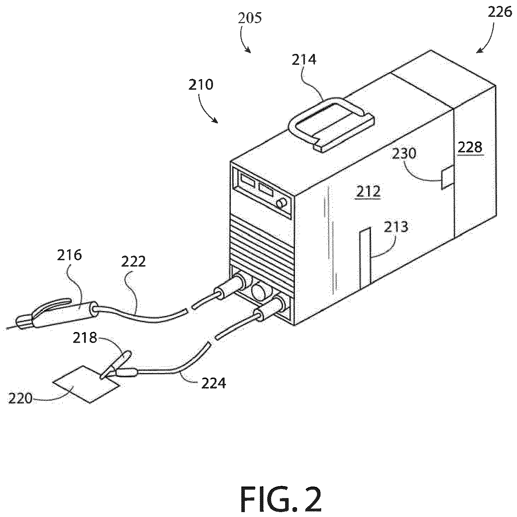

Referring now to *Fig. 2*, a perspective view of a welding apparatus **205** that can be utilized with the subject innovation. Welding apparatus **205** includes a power source **210** that includes a housing **212** enclosing the internal components of power source **210.** As will be described in greater detail below, housing **212** encloses control components **213.** Optionally, welding device **210** includes a handle **214** for transporting the welding system from one location to another. To effectuate the welding process, welding device **210** includes a torch **216** as well as a grounding clamp **218.** Grounding clamp **218** is configured to ground a workpiece **220** to be welded. As is known, when torch **216** is in relative proximity to workpiece **220,** a welding arc or cutting arc, depending upon the particular welding-type device, is produced. Connecting torch **216** and grounding clamp **218** to housing **212** is a pair of cables **222** and **224,** respectively.

The welding arc or cutting arc is generated by the power source by conditioning raw power received from an interchangeable energy storage device **226.** In a preferred embodiment, energy storage device **226** is a battery. Energy storage device **226** is interchangeable with similarly configured batteries. Specifically, energy storage device **226** is encased in a housing **228.** Housing **228** is securable to the housing of welding device **210** thereby forming welding-type apparatus **205.** Specifically, energy storage device **226** is secured to power source **210** by way of a fastening means **230.** It is contemplated that fastening means **230** may include a clip, locking tab, or other means to allow energy storage device **226** to be repeatedly secured and released from power source **210.**

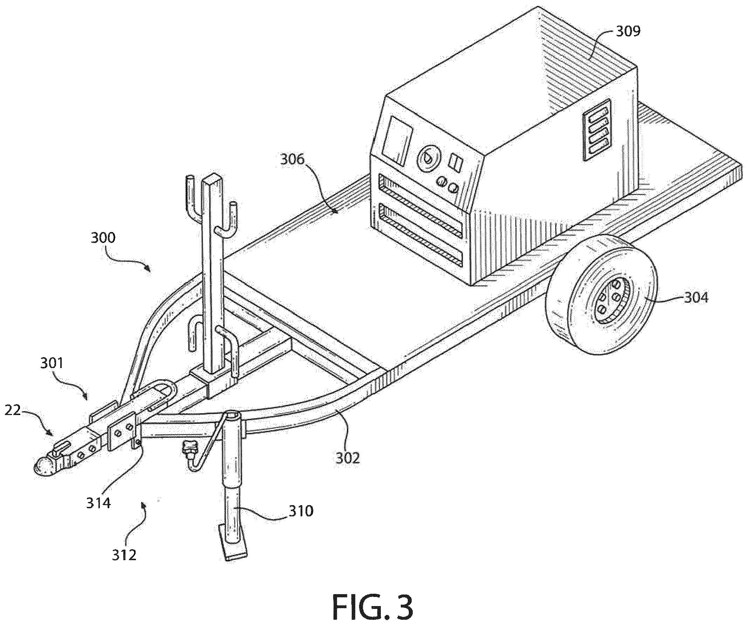

*Fig. 3* illustrates a trailer **300** incorporating a trailer hitch or hitching device, depicted generally at **301.** The trailer **300** may include a trailer frame **302** and one or more trailer wheels **304** in rotational connection with the trailer frame **302** and may further include a payload region **306** for carrying one or more cargo items, which in an exemplary manner may be a welding power supply **309** or an engine driven welding power supply **309.** The trailer **300** may also include an adjustable stand **310** for adjusting the height of the front end **312** of the trailer **300.** However, any means may be used for raising and/or lowering the front end **312** of the trailer **300.** The trailer hitch **301** may be a generally longitudinal and substantially rigid trailer hitch **301** and may be attached to the frame **302** via fasteners **314,** which may be threaded bolts.

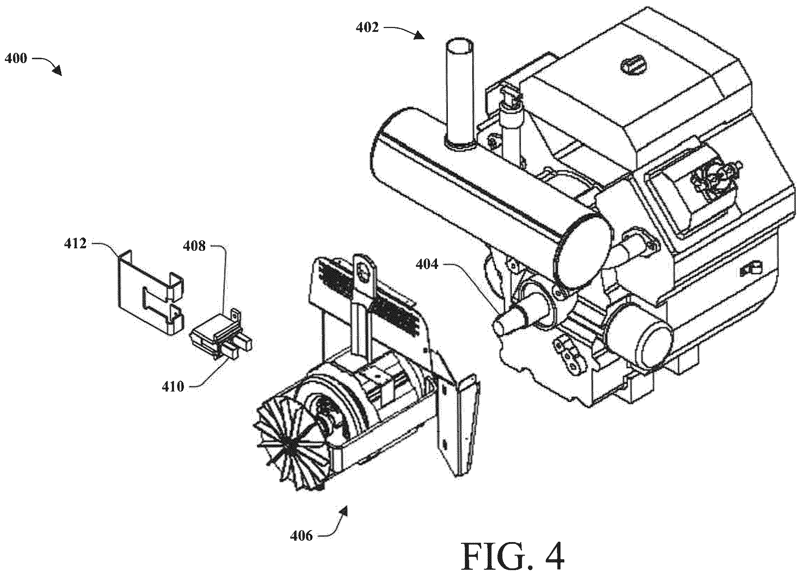

*Fig. 4* illustrates engine driven welding system **400** that includes engine **402** that actuates shaft **404.** In particular, engine **402** provides rotational movement to shaft **404** that is coupled to rotor/stator assembly **406.** Rotor/stator assembly **406** includes a rotor that is coupled to shaft **404** for rotational movement and a stator that is stationary. It is to be appreciated that rotor/stator assembly **406** can be chosen with sound engineering judgment without departing from the scope of the subject innovation. For instance, the rotor and the stator of rotor/stator assembly **406** can include one or more electromagnets, wherein the rotor rotates from rotation from shaft **404** and stator is stationary and houses the rotor.

Rotor/stator assembly **406** can include at least one brush **410** that is housed in brush assembly **408** and affixed to a portion of rotor/stator assembly **406** via bracket **412.** It is to be appreciated that brush assembly **408** can include at least one of a spring, a clip, a retainer, among others. Brush assembly **408** and bracket **412** can be chosen with sound engineering judgment without departing from the scope of the subject innovation. By way of example, brush assembly **408** is illustrated with a first brush and a second brush, however, it is to be appreciated that any suitable number of brushes can be used with the subject innovation. Brush **410** is in physical contact with at least a portion of rotor/stator assembly **406,** wherein bracket **412** places brush **410** within proximity of rotor/stator assembly **406** and a spring (not shown) provides a force to brush **410** to physically contact rotor/stator assembly **406.** In particular, brush **410** can physically contact a commutator (not shown) that is coupled to an axle (not shown) of the rotor included with rotor/stator assembly **406.**

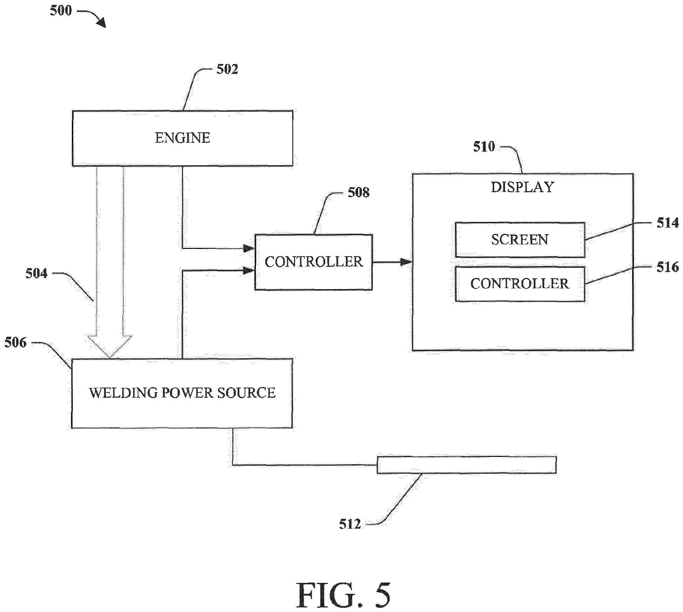

*Fig. 5* illustrates a schematic block diagram of a welding system **500,** and in particular, a welding system **500** that comprises an engine driven welding device as discussed in *Figs. 1-4**.* The welding system **500** can include an engine **502** configured to provide electrical power **504** to a welding power source **506.** The welding system **500** can further include a controller **508** that can be configured to receive data from the engine **502** and/or the welding power source **506.** The controller **508** can also be configured to communicate at least a portion of the data to a display **510,** which can display both the engine data and the welding power source data simultaneously.

The engine **502** and the welding power source **506** can operate as discussed with regards to Figs. 1-4. For example, the engine **502** can operate on gasoline or any other type of fuel. The engine **502** provides electrical power **504** to the welding power source **506** such that the welding power source **506** can condition the electrical power **504** and output welding power to a welding torch **512** to perform a welding operation. The engine **502** can include a monitoring component and diagnostics component. The monitoring component can monitor various operational or performance values of engine **502** using various sensors. For example, the monitoring component can include temperature sensors, level sensors, pressure sensors, current sensors, or voltage sensors. The diagnostics component can detect when an aspect of the engine **502** needs attention from the user. The monitoring component can monitor data such as, but not limited to, oil level, oil pressure, battery voltage, fuel level, engine temperature, coolant temperature, air filter status, spark plug life, diagnostic error codes, among others. The engine **502** can be configured to output the values, notifications, and alarms to another device such as the controller **508** or the display **510.** The engine **502** can output the values, notifications, and alarms in the form of direct outputs such as an analog or digital signal, or by way of a digital communications protocol such as Ethernet or CAN communications, among others.

Similarly, the welding power source **506** can include a monitoring component and diagnostics component. The monitoring component can include, for example, temperature sensors, level sensors, pressure sensors, current sensors, or voltage sensors. The welding power source's **506** monitoring component can monitor values for welding power source data including, but not limited to, voltage settings, current settings, operating voltage, operating current, welding trigger signal, arc detection, output on/off, wire type, wire size, among others. The welding power source **506** can be configured to output the values, notifications, and alarms to another device such as the controller **508** or the display **510.** The welding power source **506** can output the values, notifications, and alarms in the form of direct outputs such as an analog or digital signal, or by way of a digital communications protocol such as Ethernet or CAN communications, among others.

The controller **508** can receive inputs from both the engine **502** and the welding power source **506.** In certain embodiments, the controller **508** can also control the operation of one of, or both of the engine **502** and welding power source **506.** The controller's **508** communication with the engine **502** and the welding power source **506** can be in the form of direct inputs such as analog or digital signals, or by way of a digital communications protocol, such as Ethernet or CAN communications, over a bus or communications network. The controller **508** can process the data received from the engine **502** and the welding power source **506.** For example, the controller **508** can scale direct input values to operational values defined by a user and can compare the received data to limits or thresholds to create alarms or notifications. The limits or thresholds can also be defined by a user. The controller **508** is in communication with the display **510** to output engine data and welding power source data to the display **510.** The controller's **508** communication with the display can be in the form of a digital communication protocol such as CAN communications or Ethernet, among others, or it can be in the form of direct inputs such as analog or digital signals. The controller **508** can be configured to control the display **510** such that the display **510** can output information according to multiple display states, which are described in greater detail below.

The display **510** can receive the engine data and the welding power source data from the controller **508.** The display **510** can include a screen **514.** The screen **514** can be any type of display screen including, but not limited to, liquid crystal display (LCD), thin-film-transistor LCD (TFT LCD), light emitting diodes, plasma screen, among others. The display **510** can have various display screens stored thereon in computer readable memory for visually presenting the engine data and the welding power source data to a user in various display states. The display **510** can present the display screens on the screen **514** with various data fields populated by the engine data and/or the welding power source data. The display **510** can also present various display screens that allow a user to configure settings or specify parameters associated with the engine **502** or the welding power source **506.** Additional display screens can include tutorial screens that provide a user with instructions related to the welding process, or service screens that can include both engine data and welding power source data pertaining to service needs of the engine **502** or welding power source **506,** or service interval information such as estimated time until service is needed for the engine **502** or the welding power source **506.** It should be appreciated that the display **510** can also receive and display information about an air compressor, a hydraulic pump, or auxiliary power.

The display **510** can further include a display controller **516.** In certain embodiments, the display controller **516** can perform some, or all of the functions of the controller **508.** For example, the display **510** can receive the engine data and the welding power source data directly from the engine **502** and welding power source **506.** In these embodiments, the display controller **516** can scale the inputs and control the display **510** such that the display **510** can operate in multiple display states.

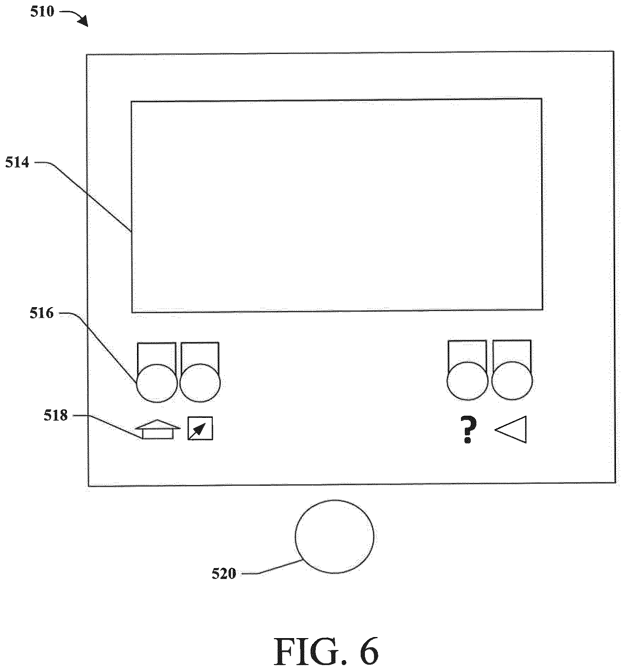

Turning now to *Fig. 6*, an exemplary display **510** is shown. Below the screen **514,** the display **510** includes pushbuttons **516** that allow a user to interact with the display **510.** Below each button, an icon **518** indicates each pushbutton's **516** function. For example, the display **510** can include pushbuttons for navigating to a home display screen, selecting an item on a display screen, opening a help or tutorial display screen, or navigating backwards to a previous display screen. Optionally, the display **510** can further include a knob **520.** The knob **520** can allow the user to navigate among a display screen by twisting the knob **520,** or select an item on a display screen by pressing the knob **520.** In certain embodiments, the screen **514** can have touchscreen functionality to allow a user to make selections via direct interactions with the screen **514.**

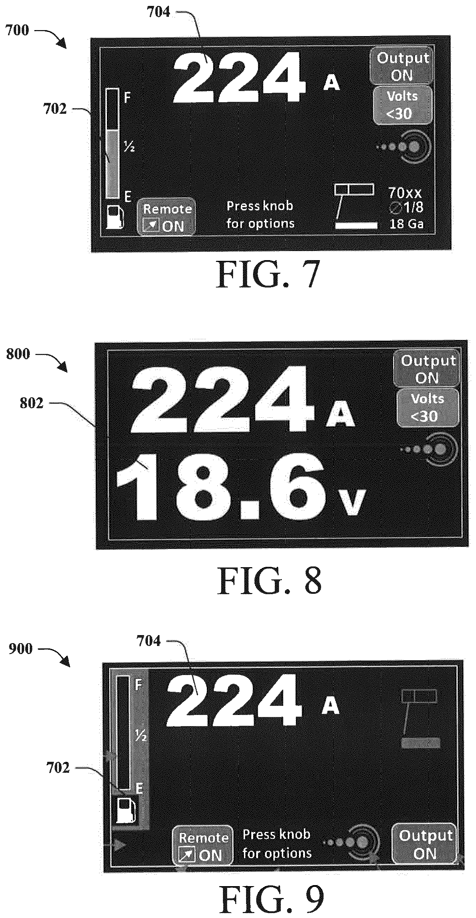

Turning now to *Figs. 7-9*, various display screens are depicted, each presented as part of different display states. Display screen **700** is presented as part of a first display state. During the first display state, engine data is displayed simultaneously with welding power source data. The data presented can be in the form of numerical values, text notifications, gauges, picture indications, alarm displays, notification displays, among others. In one example, the display **510** can operate in the first display state when the welding system **500** is idle. On display screen **700,** engine data **702** such as a fuel level gauge is displayed. In addition to the engine data, welding power source data **704** is displayed simultaneously.

While a user conducts a welding operation with the welding system **500,** the display **510** can operate in a second display state. For example, display screen **800** is presented as part of a second display state. During the second display state, the engine data **702** is removed from the screen **514,** and only the welding power source data **704** is displayed. In other embodiments, during the second display state, the engine data **702** is maintained on the screen **514,** but at a decreased size to make more room on the screen **514** for welding power source data **704.** In certain embodiments, the welding power source data **704** can be displayed at a larger font size or a different color than during the first display state. This larger font size or different color can allow a user to see the relevant welding power source data **704** easier while conducting the welding operation. The display **510** can switch from the first display state to the second display state based on a signal indicative of an active welding operation. The signal indicative of an active welding operation can be based on at least one of a trigger signal from a welding torch, a detection of an arc, or a detection of welding current. In certain embodiments, the controller **508** receives the signal indicative of an active welding operation and communicates a display transition command to the display **510** to command the display **510** to switch display states. In other embodiments, the signal indicative of an active welding operation can be received directly at the display **510** or display controller **516** to initiate a display state transition.

The display **510** can operate in a third display state when an error or fault condition related to the welding system **500** is present. The error or fault condition can include, for example, a notification or alarm alerting the user that a value is outside of a threshold, or that a component of the welding system **500** needs attention or servicing. For example, display screen **900** is presented as part of a third display state. During the third display state, engine data **702** is displayed simultaneously with welding power source data **704.** However, the engine data **702** (e.g. the fuel level gauge on display screen **900**), is displayed as a different color than during the first display state. In one example, a fuel level gauge can be displayed on display screen **700** with a green bar in a gauge having a black background. If the fuel level is depleted below a predetermined threshold, the fuel level gauge reappears on display screen **900** with a yellow bar in a gauge having a red background. In certain embodiments, the gauge's background can flash. In certain embodiments, the display **510** can emit an audible tone during the third display state to alert a user to the error condition. As soon as the error condition or conditions that cause the display **510** to operate in the third display state are rectified, the display **510** can return back to operating in the first display state if the welding system **500** is idle, or the second display state if the welding system **500** is active.

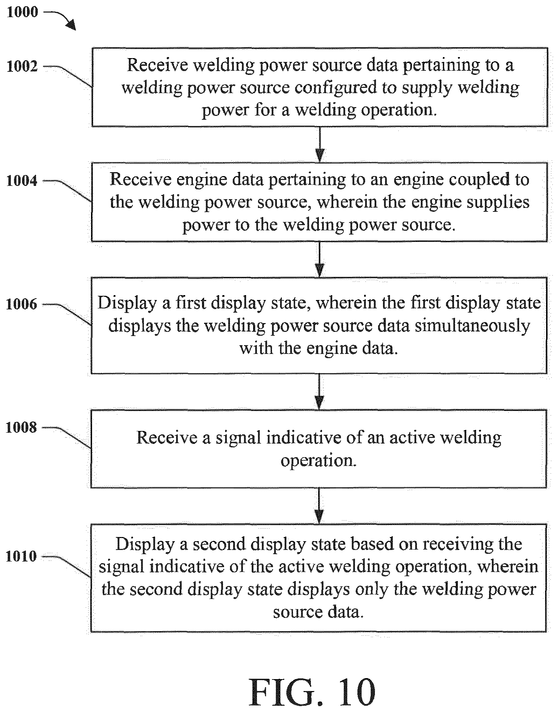

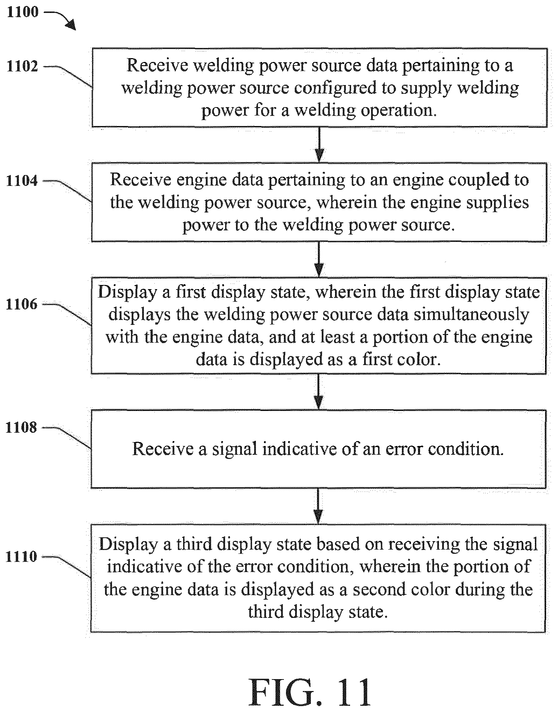

*Figs. 10* *and* *11* illustrate exemplary methods **1000** and **1100** that can be implemented by an engine driven welding device, such as welding system **500,** as described in *Figs. 1-5*. It should be appreciated that methods **1000** and **1100** can be performed by controller **508,** display **510,** display controller **516,** or any combination of these components. Turning first to *Fig. 10**,* at reference numeral **1002,** welding power source data is received. The welding power source data pertains to a welding power source configured to supply welding power for a welding operation. At reference numeral **1004,** engine data is received. The engine data pertains to an engine coupled to the welding power source, wherein the engine supplies power to the welding power source (e.g., via a generator). At reference numeral **1006,** a first display state is displayed, wherein the first display state displays the welding power source data simultaneously with the engine data. At reference numeral **1008,** a signal indicative of an active welding operation is received. At reference numeral **1010,** a second display state is displayed based on receiving the signal indicative of the active welding operation, wherein the second display state displays only the welding power source data.

Turning now to *Fig. 11**,* at reference numeral **1102,** welding power source data is received. The welding power source data pertains to a welding power source configured to supply welding power for a welding operation. At reference numeral **1104,** engine data is received. The engine data pertains to an engine coupled to the welding power source, wherein the engine supplies power to the welding power source. At reference numeral **1106,** a first display state is displayed, wherein the first display state displays the welding power source simultaneously with the engine data, and at least a portion of the engine data is displayed as a first color. At reference numeral **1108,** a signal indicative of an error condition is received. At reference numeral **1110,** a third display state is displayed based on receiving the signal indicative of the error condition, wherein the portion of the engine data is displayed as a second color during the third display state.

Disclosed is an embodiment of a welding system that includes a welding power source configured to supply welding power for a welding operation, an engine coupled to the welding power source, wherein the engine supplies power to the welding power source, and a display configured to selectively switch between at least a first display state and a second display state based on a signal indicative of an active welding operation. The first display state displays welding power source data simultaneously with engine data and the second display state displays only welding power source data.

In this embodiment, the display can be configured to operate in the first display state when the welding operation is not being performed, and in the second display state when the welding operation is being performed. The welding power source data can be displayed at a first font size during the first display state, and at a second font size during the second display state. The signal indicative of an active welding operation can be based on at least one of a trigger signal from a welding torch, a detection of an arc, or a detection of welding current. Also in this embodiment, the welding system can further comprise a controller configured to receive the welding power source data and the engine data and transmit the welding power source data and the engine data to the display. The display can comprise a display controller configured to switch the display between the first display and the second display based on the signal indicative of an active welding operation. The display can be further configured to selectively switch between the first display state and a third display state based on a signal indicative of an error condition pertaining to the welding system. The display can be configured to operate in the first display state when the error condition is not present, and in the third display state when the error condition is present and at least a portion of the engine data can be displayed as a first color during the first display state, and as a second color during the third display state.

Also disclosed is an embodiment of a method for displaying welding system data including receiving welding power source data pertaining to a welding power source configured to supply welding power for a welding operation, receiving engine data pertaining to an engine coupled to the welding power source, wherein the engine supplies power to the welding power source, displaying a first display state, wherein the first display state displays the welding power source data simultaneously with the engine data, receiving a signal indicative of an active welding operation, and displaying a second display state based on receiving the signal indicative of the active welding operation. The second display state displays only the welding power source data.

Also disclosed is an embodiment of a non-transitory, computer-readable storage medium having stored thereon computer-executable instruction for operating a display, wherein the instructions, when executed, configure a processor to obtain welding power source data from a welding power source configured to supply welding power for a welding operation, obtain engine data from an engine coupled to the welding power source, wherein the engine supplies power to the welding power source, display a first display state on a display, wherein the first display state displays the welding power source data simultaneously with the engine data, and selectively switch the display between at least the first display state and a second display state based on a signal indicative of an active welding operation. The second display state displays only the welding power source data.

While the embodiments discussed herein have been related to the systems and methods discussed above, these embodiments are intended to be exemplary and are not intended to limit the applicability of these embodiments to only those discussions set forth herein. The control systems and methodologies discussed herein are equally applicable to, and can be utilized in, systems and methods related to arc welding, laser welding, brazing, soldering, plasma cutting, waterjet cutting, laser cutting, and any other systems or methods using similar control methodology, without departing from the spirit or scope of the above discussed innovations. The embodiments and discussions herein can be readily incorporated into any of these systems and methodologies by those of skill in the art. By way of example and not limitation, a power supply as used herein (e.g., welding power supply, among others) can be a power supply for a device that performs welding, arc welding, laser welding, brazing, soldering, plasma cutting, waterjet cutting, laser cutting, among others. Thus, one of sound engineering and judgment can choose power supplies other than a welding power supply departing from the intended scope of coverage of the embodiments of the subject innovation.

The above examples are merely illustrative of several possible embodiments of various aspects of the present innovation, wherein equivalent alterations and/or modifications will occur to others skilled in the art upon reading and understanding this specification and the annexed drawings. In particular regard to the various functions performed by the above described components (assemblies, devices, systems, circuits, and the like), the terms (including a reference to a "means") used to describe such components are intended to correspond, unless otherwise indicated, to any component, such as hardware, software, or combinations thereof, which performs the specified function of the described component (e.g., that is functionally equivalent), even though not structurally equivalent to the disclosed structure which performs the function in the illustrated implementations of the innovation. In addition although a particular feature of the innovation may have been disclosed with respect to only one of several implementations, such feature may be combined with one or more other features of the other implementations as may be desired and advantageous for any given or particular application. Also, to the extent that the terms "including", "includes", "having", "has", "with", or variants thereof are used in the detailed description and/or in the claims, such terms are intended to be inclusive in a manner similar to the term "comprising."

This written description uses examples to disclose the innovation, including the best mode, and also to enable one of ordinary skill in the art to practice the innovation, including making and using any devices or systems and performing any incorporated methods. The patentable scope of the innovation is defined by the claims, and may include other examples that occur to those skilled in the art. Such other examples are intended to be within the scope of the claims if they have structural elements that are not different from the literal language of the claims, or if they include equivalent structural elements with insubstantial differences from the literal language of the claims.

In the specification and claims, reference will be made to a number of terms that have the following meanings. The singular forms "a", "an" and "the" include plural referents unless the context clearly dictates otherwise. Approximating language, as used herein throughout the specification and claims, may be applied to modify a quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Moreover, unless specifically stated otherwise, a use of the terms "first," "second," etc., do not denote an order or importance, but rather the terms "first," "second," etc., are used to distinguish one element from another.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

The best mode for carrying out the innovation has been described for purposes of illustrating the best mode known to the applicant at the time and enable one of ordinary skill in the art to practice the innovation, including making and using devices or systems and performing incorporated methods. The examples are illustrative only and not meant to limit the innovation, as measured by the scope and merit of the claims. The innovation has been described with reference to preferred and alternate embodiments. Obviously, modifications and alterations will occur to others upon the reading and understanding of the specification. It is intended to include all such modifications and alterations insofar as they come within the scope of the appended claims or the equivalents thereof. The patentable scope of the innovation is defined by the claims, and may include other examples that occur to one of ordinary skill in the art. Such other examples are intended to be within the scope of the claims if they have structural elements that do not differentiate from the literal language of the claims, or if they include equivalent structural elements with insubstantial differences from the literal language of the claims.

**REFERENCE NUMBERS**

| | | | |
|---|---|---|---|
| 100 | welding device | 402 | engine |
| 112 | housing | 404 | shaft |
| 114 | eyehook | 406 | rotor/stator assembly |
| 116 | fork recesses | 408 | brush assembly |
| 118 | access panel | 410 | brush |
| 120 | acess panel | 412 | bracket |
| 122 | top panel | 500 | welding system |
| 124 | side panel | 502 | engine |
| 126 | end panel | 504 | eletrical power |
| 128 | opening | 506 | welding power source |
| 130 | exhaust port | 508 | controller |
| 132 | fuel port | 510 | display |
| 205 | welding apparatus | 512 | welding torch |
| 210 | power source | 514 | screen |
| 212 | housing | 516 | pushbutton // controller |
| 213 | control component | 518 | icon |
| 214 | handle | 520 | knob |
| 216 | torch | 700 | screen |
| 218 | grounding clamp | 702 | engine data |
| 220 | workpiece | 704 | welding power source data |
| 222 | pair of cables | 800 | display screen |
| 224 | pair of cables | 900 | display screen |
| 226 | battery | 1000 | exemplary method |
| 228 | housing | 1100 | exemplary method |
| 230 | fastening means | 1002 | step receiving welding power source data |
| 300 | trailer | | |
| 301 | hitch | 1004 | step receiver engine data |
| 302 | trailer frame | 1006 | step display a first display state |
| 304 | trailer wheels | 1008 | step receive a signal |
| 306 | payload region | 1010 | step display a second display state |
| 309 | welding power supply | 1102 | step receiving welding power source data |
| 310 | adjustable stand | | |
| 312 | front end | 1104 | step receiver engine data |
| 314 | fastener | 1106 | step display a first display state |
| 400 | welding system | 1108 | step receive a signal |
| 1110 | step display a third display state | | |

## Claims

1. A welding system (400, 500) comprising:
a welding power source (210, 506) configured to supply welding power for a welding operation;
an engine (402, 502) coupled to the welding power source (210, 506), wherein the engine (402, 502) supplies power to the welding power source (210, 506); and
a display (510) configured to selectively switch between at least a first display state and a second display state based on a signal indicative of an active welding operation, wherein the first display state displays welding power source data simultaneously with engine data and the second display state displays only welding power source data.

2. The welding system (400, 500) of claim 1, wherein the display (510) is configured to operate in the first display state when the welding operation is not being performed, and in the second display state when the welding operation is being performed.

3. The welding system (400, 500) of claim 1 or 2, further comprising a controller (508) configured to receive the welding power source data and the engine data and transmit the welding power source data and the engine data to the display (510).

4. The welding system (400, 500) of any of the claims 1 to 3, wherein the display comprises a display controller (508) configured to switch the display (510) between the first display and the second display based on the signal indicative of an active welding operation.

5. The welding system (400, 500) of any of the claims 1 to 4, wherein the display (510) is further configured to selectively switch between the first display state and a third display state based on a signal indicative of an error condition pertaining to the welding system, and/or
wherein the display (510) is configured to operate in the first display state when the error condition is not present, and in the third display state when the error condition is present.

6. The welding system (400, 500) of any of the claims 1 to 5, wherein at least a portion of the engine data is displayed as a first color during the first display state, and as a second color during the third display state.

7. A method for displaying welding system data, comprising:
receiving welding power source data pertaining to a welding power source configured to supply welding power for a welding operation;
receiving engine data pertaining to an engine coupled to the welding power source, wherein the engine supplies power to the welding power source;
displaying a first display state, wherein the first display state displays the welding power source data simultaneously with the engine data;
receiving a signal indicative of an active welding operation; and
displaying a second display state based on receiving the signal indicative of the active welding operation, wherein the second display state displays only the welding power source data.

8. The method or system of any of the claims 1 to 7, wherein the welding power source data is displayed at a first font size during the first display state, and at a second font size during the second display state.

9. The method or system of any of the claims 1 to 8, wherein the signal indicative of the active welding operation is a trigger signal from a welding torch, and/or wherein the signal indicative of the active welding operation is based on at least one of a trigger signal from a welding torch, a detection of an arc, or a detection of welding current.

10. The method of any of the claims 7 to 9, further comprising: receiving a signal indicative of an error condition; and
displaying a third display state based on receiving the signal indicative of an error condition, wherein at least a portion of the engine data is displayed as a first color during the first display state, and as a second color during the third display state.

11. A non-transitory, computer-readable storage medium having stored thereon computer- executable instruction for operating a display (510), wherein the instructions, when executed, configure a processor to:
obtain welding power source data from a welding power source (210, 506) configured to supply welding power for a welding operation;
obtain engine data from an engine (402, 502) coupled to the welding power source (210, 506), wherein the engine (402, 502) supplies power to the welding power source (210, 506);
display (510) a first display state on a display, wherein the first display state displays the welding power source data simultaneously with the engine data; and
selectively switch the display between at least the first display state and a second display state based on a signal indicative of an active welding operation, wherein the second display state displays only the welding power source data.

12. The non-transitory, computer-readable storage medium of claim 11, further storing instructions that configure the processor to display the first display state when the welding operation is not being performed, and display the second display state when the welding operation is being performed.

13. The non-transitory, computer-readable storage medium of claim 11 or 12, further storing instructions that configure the processor to display the welding power source data at a first font size during the first display state, and at a second font size during the second display state.

14. The non-transitory, computer-readable storage medium of any of the claims 11 to 13, further storing instructions that configure the processor to selectively switch the display between the first display state and a third display state based on a signal indicative of an error condition.

15. The non-transitory, computer-readable storage medium of any of the claims 11 to 14, further storing instructions that configure the processor to display the first display state when the error condition is not present, and to display the third display state when the error condition is present, and/or
further storing instructions that configure the processor to display at least a portion of the engine data as a first color during the first display state, and as a second color during the third display state.
